Europäisches Patentamt

European Patent Office

Office européen des brevets

(19)

(11) **EP 0 838 390 A2**

(12) **EUROPÄISCHE PATENTANMELDUNG**

(43) Veröffentlichungstag:
29.04.1998 Patentblatt 1998/18

(51) Int. Cl.⁶: **B62K 27/12**

(21) Anmeldenummer: 97118595.4

(22) Anmeldetag: 25.10.1997

(84) Benannte Vertragsstaaten:
AT BE CH DE DK ES FI FR GB GR IE IT LI LU MC
NL PT SE
Benannte Erstreckungsstaaten:
AL LT LV RO SI

(30) Priorität: 28.10.1996 DE 19644632

(71) Anmelder: Seibert, Christian
91738 Pfofeld (DE)

(72) Erfinder: Seibert, Christian
91738 Pfofeld (DE)

(54) **Anhängevorrichtung zur Befestigung von mehrspurigen Anhängern an Zweirädern**

(57) Es wird eine Anhängevorrichtung für Zweiräder beschrieben, an der mehrspurige Anhänger derart befestigt werden, daß sie sich im Vergleich zu Anhängern mit Anhängevorrichtungen nach dem Stand der Technik leichter ziehen lassen.

Bei der erfindungsgemäßen Anhängevorrichtung liegt die Verbindungsstelle zwischen Anhängekupplung am Zweirad und der Zugstange des Anhängers (4) wesentlich unter der Ebene, die durch die Radnaben des Zweirades aufgespannt wird. Dies wird durch drehmomentenfeste Befestigung (2) eines verwindungsfesten Holmteiles (6) am herkömmlichen Zweiradrahmen erreicht, das sich in Richtung Laufboden (7) vom Zweiradrahmen wegerstreckt, und an dessen Ende eine Anhängekupplung (5) in bekannter Form fest verbunden wird. Diese Anhängekupplung (5) wird dann mit der Zugstange des Anhängers (4) verbunden. Dabei kann die Anhängekupplung (5) auf dem zusätzlichen Holmteil (6) oder auf einer entsprechenden Zweiradrahmenverlängerung frei nach oben oder nach unten hin verschoben werden.

Figur 1

## Beschreibung

Die Erfindung betrifft Anhängevorrichtungen, mit denen mehrspurige Anhänger an ziehenden Zweirädern befestigt werden.

Üblicherweise sind derartige Anhängevorrichtungen am Zweiradsattel, auf Höhe der Radnaabe des ziehenden Zweirades oder im Ebenenbereich zwischen Zweiradsattel und Radnaabe fest mit dem Zweirad verbunden. Derartige Anhängevorrichtungen haben den Nachteil, daß sie bei jedem vorwärtstreibenden Impuls, der von der Radnaabe auf das gesamte System Zweirad und Zweiradfahrer wirkt, entweder ein zusätzliches Steig- oder Rotationsmoment um die Radnaabe des hinteren Antriebsrades erzeugen, oder daß der Trägheitsimpuls des Anhängers auf das Gesamtsystem Zweirad nur neutral wirkt. Das Steigmoment ist dann vorhanden, wenn die Zugstange des Anhängers über dem Angriffspunkt des vorwärtstreibenden Impulses, der örtlich in der Radnaabe des Antriebsrades liegt, angreift. Ein neutrales Verhalten des Anhängers auf das Zweiradsystem ist dann vorhanden, wenn die Trägheit des Anhängers genau auf der Radnaabenebene angreift. Grundsätzlich ist dieses Steigmoment auch dann vorhanden, wenn kein Anhänger angehängt ist. Es verursacht auch beim Zweiradfahren ohne Anhänger immer Energieverluste, die nicht in zielgerichtete Bewegung umgesetzt werden können. Auch das ganz normale Zweiradfahren ist mit diesem unwirtschaftlichen Steigmoment belastet.

Eine Verbesserung im Zugverhalten wäre dann möglich, wenn bei jedem in der Radnaabe wirkenden Antriebsimpuls das Steigemoment des Zweiradsystems ausgeschaltet oder zumindest vermindert werden könnte. In diesem Fall kann der gesamte Impuls der Radnaabe in einen vorwärtstreibenden Impuls umgesetzt werden. Er muß sich nicht mehr in einen vorwärtstreibenden und einen steigenden Impuls aufteilen. Zur Lösung dieses Problems schlage ich vor, daß die Anhängerzugstange mit dem Zweiradrahmen unter der Radnaabenebene verbunden wird. Dadurch wird bei jedem Antriebsimpuls ein neues zusätzliches Rotationsmoment um die Antriebsradachse erzeugt, das aber kein Steigmoment sondern ein Senkungsmoment darstellt. In dem Fall treten dann gleichzeitig ein Steig- und ein Senkungsmoment auf. Ein Steigmoment aus der Trägheit des Zweiradsystems und ein Senkmoment aus der Trägheit des Anhängers. Beide Momente bekämpfen sich gegenseitig. In Folge desssen werden beide Momente neutralisiert. Die Zusatzbewegung des Zweirades nach oben wird aufgehoben oder vermindert. Wenn die Bewegung nach oben nicht mehr vorhanden ist, dann ist auch der Impuls nach oben weggefallen. Der Gesamtimpuls in der Radnaaben kann nun voll antriebswirksam in Fahrtrichtung wirken.

Es gelten folgende physikalischen Gesetzmäßigkeiten:

Gesamtimpuls in der Radnaabe = P
Vorwärtstreibende Impulsanteil = $\vec{P}$
Steigungstreibende Impulsanteil = P↑
Senkungstreibende Impulsanteil = P↓

Für Zweiräder ohne Anhänger nach dem Stand der Technik gilt:

$$P = \vec{P} + P\uparrow$$

$$\vec{P} = P - P\uparrow$$

Für Zweiräder mit Anhänger aber ohne erfindungsgemäßer Anhängevorrichtung und einer Anhängung auf der Radnaabenebene gilt:

$$P = \vec{P} + P\uparrow$$

$$\vec{P} = P - P\uparrow$$

Für Zweiräder mit Anhänger und mit erfindungsgemäßer Anhängevorrichtung gilt:

$$P = \vec{P} + P\uparrow + P\downarrow$$

$$P\uparrow = - P\downarrow$$

$$P = \vec{P} + P\uparrow - P\downarrow$$

$$\vec{P} = P$$

Bei der erfindungsgemäßen Anhängevorrichtung wirkt also der gesamte in der Radnaabe vorhandene Impuls antriebswirksam.

Für spezielle Probleme sind auch Anhängevorrichtungen bekannt, bei denen die Zugstange mit dem Anhänger unter der Radnaabenebene verbunden wird. So beschreibt die US 399 3321 eine Anhängevorrichtung, bei der die Verbindungsstelle zwischen Anhängerzugstange und dem Zweiradsystem unter der Radnaabenebe liegt. Allerdings ist das senkend wirdende Rotationsmoment fast nicht vorhanden. Dadurch, daß die Verbindungsstelle zwischen Zugstange und Zweiradrahmen sehr nahe an der Radnaabenebene liegt und da sie gleichzeitig auch noch weit hinter der Radnaabe angeordnet ist, wird durch die Trägheit des Anhängers fast kein senkendes Rotationsmoment mehr erzeugt. Entsprechend kann auch das Steigmoment des Zweiradsystems nur unwesentlich vermindert werden. Eine spürbare Erleichterung beim Beschleunigen ist nicht vorhanden. Überdies beschreibt diese Anhängevorrichtung keine Anhängevorrichtung zur Einsparung von Antriebsenergie.

Sie beschreibt eine technische Lösung auf die Frage „wie kann man einen Anhänger an einem Zweirad befestigen?".

Ein Leser dieser Anmeldung wird durch die veröffentlichten Details nicht dazu angeregt weiter nach einer Lösung zu suchen, die die energetischen Antriebsbedingungen verbessern soll.

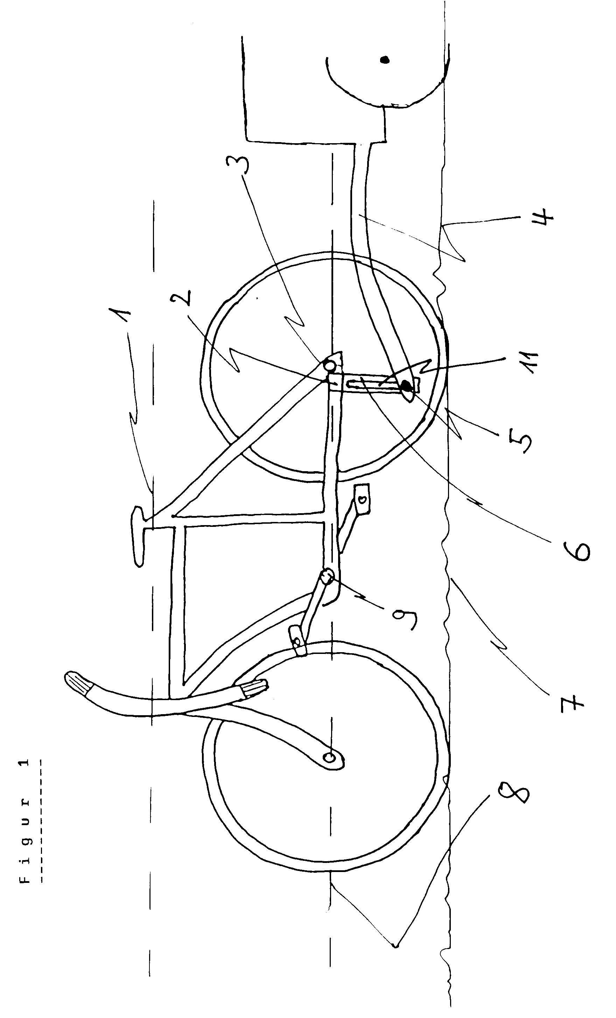

Die EP 0461323A1 beschreibt ebenfalls eine Lösung für das technische Problem „wie kann man einen Anhänger an einem motorisiertes Zweirad anhängen?". Auch diese Anmeldung wird nicht unter dem Aspekt beschrieben, daß dadurch besondere energiesparende Aspekte verbunden wären. Ein Leser kommt auch hier nicht auf den Gedanken diese Anmeldung unter Energiesparaspekten weiter auszutesten. Ein Energieproblem ist für ihn nicht vorhanden. Überdies erzeugt auch diese Anhängevorrichtung kein nennenswertes Rotationsmoment, das dem Steigungsmoment entgegengerichtet ist. Hier liegt die Verbindungsstelle zwischen der Zugstange des Anhängers und dem Zweirad zwar auf einer Höhe von ca. 50% der Entfernung Radnaabe zu Lautboden. Das Rotationsmoment wird aber zwischen den Punkten 5 und 9 der in Figur 1 dieser Anmeldung dargestellten Anwendung erzeugt.

Da beide Punkte sehr weit voneinander entfernt liegen, greift der Trägheitsimpuls des Anhängers als eine sehr schräg wirkende Kraft am Zweirad an. Eine schräge Kraft erzeugt nur ein sehr schwaches Rotationsmoment. Somit ist auch diese Anmeldung nicht geeignet die Steigbewegung des Zweiradsystems nennenswert zu vermindern. Der Teil der Anhängevorrichtung aus der EP 0461323A1, der von oben nach unten verläuft, soll nur die nach unten wirkende Kraft aufnehmen, die an der Verbindungsstelle zwischen Zugstange und Zweirad vorhanden ist. Ein nennenswertes Rotationsmoment kann hierdurch nicht erzeugt werden, da der Zugimpuls aus Gründen der Materialelastizität zum überwiegenden Teil zwischen den Punkten 5 und 9 der Figur 1 aus dieser Anmeldung umgesetzt wird. Der Elastizitätsfaktor von gezogenem Material ist wesentlich geringer als wenn auf gleichstarkem Material Biegekräfte wirken.

Entsprechend kann auch diese Anhängevorrichtung dem Steigmoment des Zweirades kein ausreichendes entgegengerichtetes Rotationmoment gegenüberstellen. Ein Energieeinsparungseffekt ist deshalb kaum vorhanden.

Die DE 84 12813 U1 betrifft einen einspurigen Fahrradanhänger. Hier wird das Problem gelöst, wie ein einspuriger Fahrradanhänger an einem Fahrrad befestigt werden kann, ohne daß er zur Seite hin umkippt. Auch hier wird ein Leser keine weiteren Energieeinspareffekte suchen, da er durch die Anmeldung nicht zu solchem Tun angeregt worden ist. Überdies gibt die Anmeldung für das von ihr beschriebene Problem eine ausreichende Lösung, so daß für einen Leser kein Grund besteht nach anderen Verbindungsstellen zwischen Zugstange und Zweirad zu suchen. Es ist nicht naheliegende von dieser Anmeldung auf energetische Verbesserungen zu schließen, die bei einem Verschieben der Verbindungsstelle noch möglich wären. Hierzu bedarf es erst eines konkreten Anstoßes, der bisher noch nicht vorhanden ist. Da sich die Anmeldung nur auf einspurige Anhänger bezieht, ist sie für die erfindungsgemäße Anmeldung nicht hinderlich. Die Merkmale der Radialen Erstreckung nach unten und die Schräge des Zusatzholmteiles sind nicht im Zusammenhang mit der erfindungsgemäßen Aufgabe beschrieben worden. Sie stellen eine Speziallösung für einspurige Fahrradanhänger dar. Überdies wird das hier erzeugte Rotationsmoment nur teilweise zwischen der Radnaabe und der Verbindungsstelle zwischen Zugstange und Zweirad erzeugt. Das Rotationsmoment wird in dieser Anmeldung überwiegend zwischen der gemeinsamen Verbindungsstelle und der linken Gebäckstrebe erzeugt.

Das zielgerichtete senkend wirkende Rotationsmoment wird dadurch stark eingeschränkt. Der Energieeinspareffekt ist hier nur stark gemindert vorhanden.

Alle diese geschilderten Anhängevorrichtungen beschreiben einen Stand der Technik, der ganz andere Probleme behandelt, und der dementsprechend keinen Einfluß auf die erfindungsgemäße Höhe der Anmeldung haben darf.

Der erfindungsgemäßen Anmeldung liegt die Aufgabe zugrunde, eine Anhängevorrichtung zu beschreiben, die gegenüber dem Stand der Technik eine energiesparendere Beschleunigung des Anhängers ermöglicht.

Die Aufgabe wird erfindungsgemäß dadurch gelöst, daß der Befestigungsort der Anhängekupplung am Zweiradrahmen von der Radnaabenhöhe des ziehenden Rades in Richtung Lautboden nach unten verschoben wird. Dies wird dadurch erreicht, daß entweder der gesamte Zweiradrahmen von der Radbefestigungsstelle in Richtung Laufboden verlängert wird, oder daß am herkömmlichen Zweiradrahmen ein verwindungsfestes Holmteil derart drehmomentenfest befestigt wird, daß sich das zusätzliche Holmteil von der Radnaabenebene in Richtung Laufboden erstreckt.

Das zusätzliche Holmteil kann auch im Ebenenbereich zwischen der Radnaabenebene und der Sattelebene befestigt werden. Allerdings ist es besser, wenn dies auf der Ebene der Radnaabe geschieht. Das zusätzliche Holmteil ist vom Kurbelgehäuse aus nach hinten anzuordnen. Dieses zusätzliche Holmteil kann mit dem Rahmen fest verschweißt sein. Es kann aber auch je nach Bedarf durch drehmomentenfeste Verschraubung am Rahmen befestigt werden. Die Art der Befestigung ist für den Erfolg unwesentlich. Am Ende dieses zusätzlichen Holmteiles oder des erweiterten Rahmenteils wird nun eine Anhängekupplung befestigt, in die das gezogene Gefährt eingekuppelt wird. Die Anhängekupplung kann an dem zusätzlichen Holmteil fest verschweißt werden. Ratsam ist es aber, wenn die Anhängekupplung je nach Bedarf von der Radnaabe in Richtung Laufboden verschoben werden kann, um dann nach Erreichen der Zielposition rutschfest mit dem Zusatzholmteil verschraubt zu werden. Dies hat den Vorteil, daß durch das Verschieben unterschiedliche Abstände von der Radnaabenebene möglich sind. Je nach angehängter Last kann es vorteilhaft sein diese Position zu verändern.

Die Variabilität des Kupplungsortes kann wie folgt erreicht werden:

1. Das zusätzliche Holmteil kann im Bereich zwischen Radnaabe und dem dem Laufboden zugerichteten Holmende mehrere Lochungen aufweisen, in die dann die Anhängekupplung versteckt und rutschfest verschraubt wird.

2. Das zusätzliche Holmteil kann im Bereich zwischen Radnaabe und dem dem Laufboden zugerichteten Holmteilende mittig aufgeschlitzt sein. In diesem Schlitz kann dann die Anhängekupplung stufenlos verschoben und bei Erreichen der Zielposition rutschfest durch eine Schraube, die durch den Schlitz im Holm und durch die Anhängekupplung geht, verschraubt werden. Das zusätzliche Holmteil soll sich senkrecht von der Radnaabe in Richtung Laufboden erstrecken. Dann schließt der Laufboden zu der radialen Erstreckungsrichtung des Holmteiles einen 90 Grad Winkel ein. In dieser Form wird das Leistungsoptimum erzielt. Das zusätzliche Holmteil kann sich aber auch schräg nach vorne oder nach hinten von seinem Befestigungsort am Rahmen in Richtung Laufboden hin erstrecken, wobei es auch gebogen oder geknickt sein kann. Alle diese Ausformungen führen gegenüber der Befestigung auf Radnaabenhöhe oder darüber zu reduziertem Kraftbedarf. Allerdings erreichen sie nicht das Optimum der geradlinigen Ausbildung, die senkrecht nach unten verläuft.

Das zusätzliche Holmteil sollte sich soweit wie nur möglich zum Lautboden hin erstrecken, so daß die Kupplung möglichst weit von der Radnaabenebene entfernt angebracht werden kann. Die Begrenzung hierfür wird einzig durch die Bewegungseinschränkung definiert, die ein am Laufboden anstoßendes Zusatzholmteil verursacht. Auch hier baut sich die Energieeinsparungsgröße kontinuierlich mit steigender Entfernung von der Radnaabenebene auf.

Entsprechend ist ein Kompromiß zwischen Bewegungseinschränkung und Energieersparnis je nach spezieller Nutzung des Zweirades zu schließen.

Die optimale Anhängekupplung erstreckt sich also senkrecht von ihrem Rahmenbefestigungsort in Richtung Laufboden und wird nahezu auf Laufbodenebene mit der Zugstange des Anhängers zusammengekuppelt.

Selbstverständlich gelten die obigen Ausführungen sowohl für unmotorisierte als auch für motorisierte Zweiräder.

Bezugszeichenliste für die nachfolgenden Zeichnungen

1) Sattelebene
2) Befestigungsort des Holmteils am Rahmen
3) Radnaabe
4) Zugstange des Anhängers
5) Anhängekupplung
6) Zusätzliches verwindungsfestes Holmteil
7) Lautboden
8) Radnaabenebene
9) Kurbelgehäuse und Tretlager
10) Ohne Benennung
11) Schlitzung des zusätzlichen Holmteiles
12) Verbindungsrohr zwischen Sattel und Radnaabe
13) Ohne Benennung
14) Rahmenteil
15) Verbindungsstelle der Rahmenteile 12 und 14

Zeichnungsbeschreibungen

Figur 1 zeigt eine optimale Ausführung der Anhängevorrichtung. Das zusätzliche Holmteil (6) ist an seinem Befestigungsort drehmomentenfest mit dem Zweiradrahmen verbunden.

Das zusätzliche Holmteil (6) ist nahezu über seine gesamte Länge in der Mitte geschlitzt (11).

In diesem Schlitz kann die Anhängekupplung frei verschoben werden und je nach Bedarf am entsprechenden Ort durch Verschraubung fixiert werden. Der Befestigungsort des Zusatzholmteiles liegt hier direkt neben der Radnaabenbefestigungsstelle.

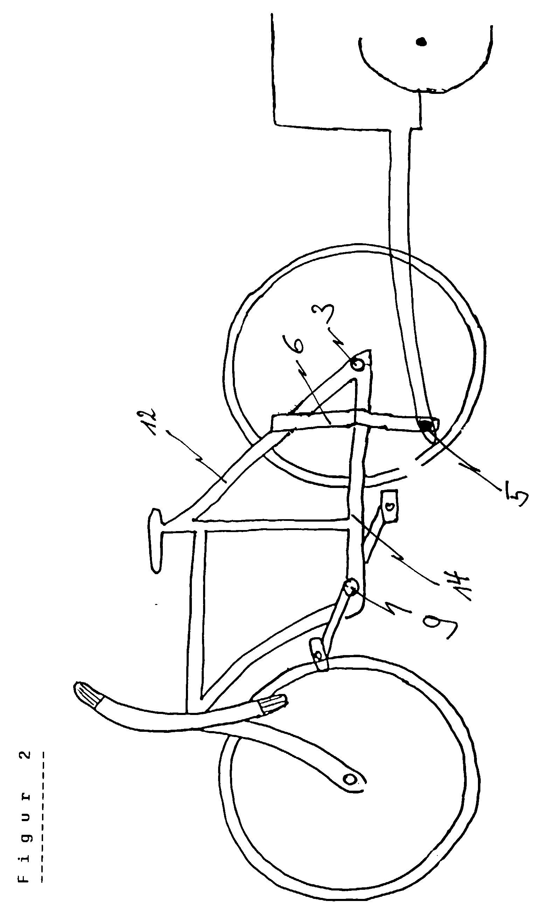

Figur 2 zeigt eine weitere vorteilhafte Ausführung der Anhängevorrichtung. Das zusätzliche Holmteil (6) wird hier am Verbindungsrohr (12) zwischen Sattel und Radnaabe (3) drehmomentenfest und verwindungsfest befestigt. Das Zusatzholmteil (6) hat in diesem Fall keine bewegungshemmende Verbindung zum Rahmenteil (14), das sich zwischen Radnaabe (3) und Tretlager (9) erstreckt. Die Verbindung mit dem Anhänger erfolgt an der Anhängekupplung (5).

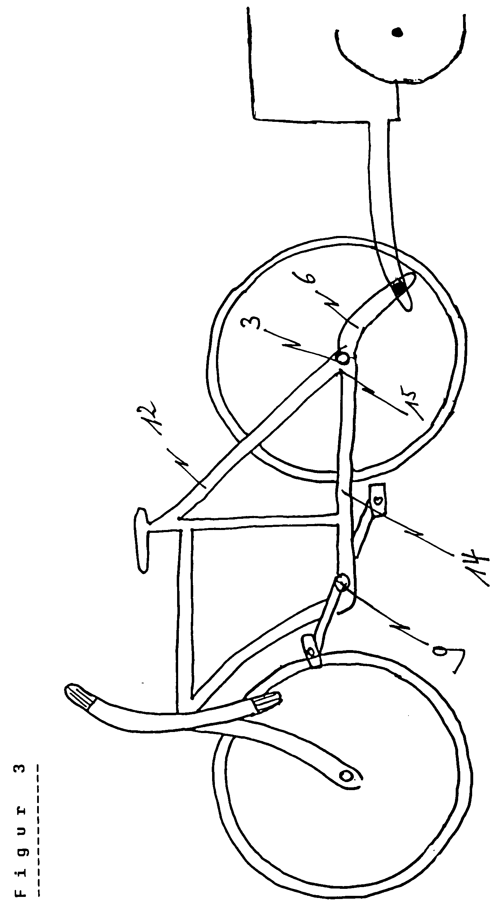

Figur 3 zeigt eine weitere vorteilhafte Ausführung der Anhängevorrichtung.

Das zusätzliche Holmteil (6) wird an der gemeinsamen Verbindungsstelle (15) der beiden Rahmenteile (14) und (12) drehmomentenfest befestigt. Es (6) erstreckt sich rückwärtsgerichtet schräg nach unten. Das zusätzliche Holmteil (6) kann je nach Wunsch am Rahmen angeschraubt oder direkt in den Rahmen integriert sein.

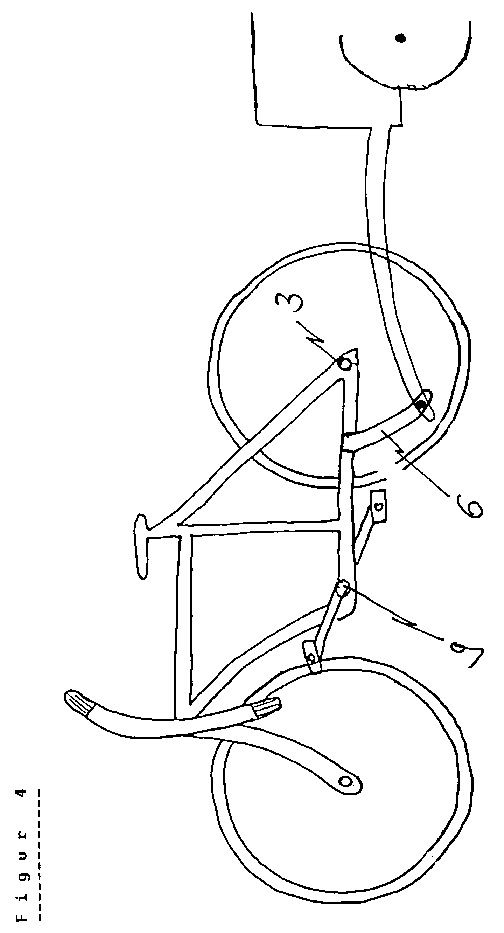

Figur 4 zeigt eine weitere vorteilhafte Ausführung der Anhängevorrichtung. Hier ist der Befestigungsort des zusätzlichen Holmteils (6) weiter von der Radnaabe (3) in Richtung zum Tretlager (9) hin verschoben. Überdies erstreckt sich das zusätzliche Holmteil (6) wieder rückwärts gerichtet schräg nach unten.

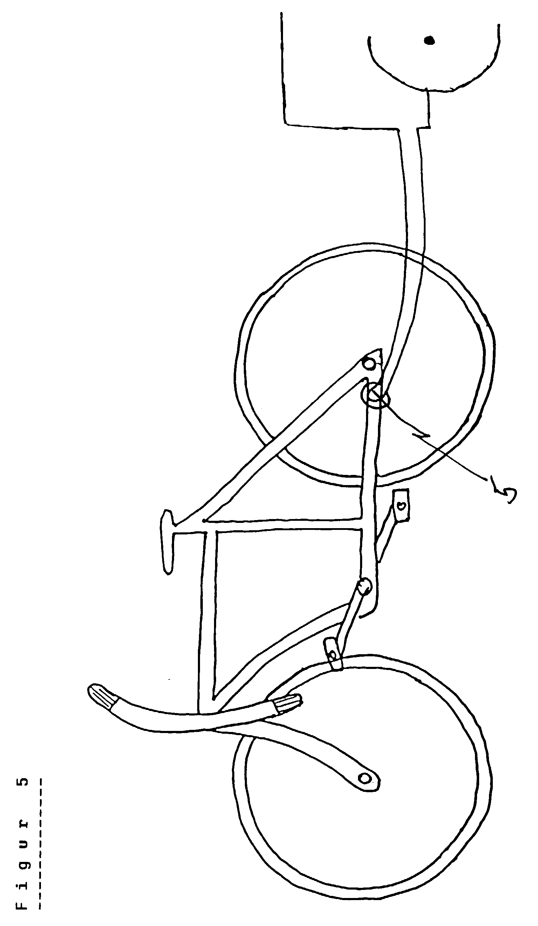

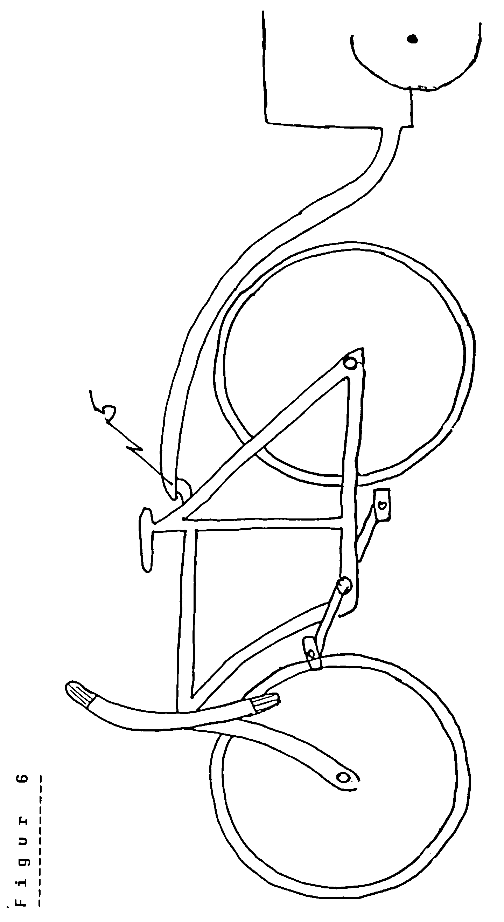

Figur 5 zeigt eine bekannte Art der Befestigung der Anhängekupplung (5) am Zweiradrahmen Figur 6 zeigt eine weitere bekannte Art der Befestigung der Anhängekupplung (5) am Zweiradrahmen.

**Patentansprüche**

1. Vorrichtung zur Anhängung von mehrspurigen Anhängern an unmotorisierte Zweiräder, dadurch **gekennzeichnet,** daß die Zugstange des Anhängers auf einer Ebene mit der Anhängekupplung des ziehenden Zweirades verbunden werden kann, die mehr als 25% des radialen Abstandes zwischen der Laufebene und der Radnaabenebene von der Radnaabenebene abgesenkt liegt.

2. Vorrichtung nach Anspruch 1, dadurch **gekennzeichnet,** daß die Verbindungslinie aus dem Mittelpunkt der Angriffspunkte des zusätzlichen Holmteiles oder der Rahmenverlängerung am Zweiradrahmen, zusammen mit dem Angriffspunkt des Anhängers am Zusatzholmteil eine Linie aufspannen, die zusammen mit dem Laufboden einen Winkel bildet, der größer als 30° und kleiner als 150° ist.

3. Vorrichtung nach Anspruch 1, dadurch **gekennzeichnet,** daß der Ort der Anhängekupplung auf dem zusätzlichen Holmteil oder der Rahmenverlängerung zwischen der Radnaabe und dem Laufboden verschoben oder variabel versteckt werden kann.

4. Vorrichtung nach Anspruch 2, dadurch **gekennzeichnet,** daß der Ort der Anhängekupplung auf dem zusätzlichen Holmteil oder der Rahmenverlängerung zwischen der Radnaabe und dem Laufboden verschoben oder variabel versteckt werden kann.

Figur 1

Figur 2

EP 0 838 390 A2

Figur 3
------------

EP 0 838 390 A2

Figur 4

Figur 5

Figur 6
-----------

EP 0 838 390 A2